(19) **Europäisches Patentamt European Patent Office Office européen des brevets**

(11) **EP 2 079 037 A2**

(12) **EUROPEAN PATENT APPLICATION**

(43) Date of publication:
**15.07.2009 Bulletin 2009/29**

(51) Int Cl.:
**G06K 9/00** *(2006.01)*

(21) Application number: **09250058.6**

(22) Date of filing: **09.01.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (71) Applicant: **Sonavation, Inc.**<br>**Palm Beach Gardens FL 33418 (US)** |
| | (72) Inventor: **Jahromi, Omid S.**<br>**Palm Beach Gardens, Florida 33418 (US)** |
| (30) Priority: **09.01.2008 US 7344** | (74) Representative: **Jones, Nicolas Guy et al**<br>**R.G.C. Jenkins & Co**<br>**26 Caxton Street**<br>**GB-London SW1H 0RJ (GB)** |

(54) **Method and system for swipe sensor image alignment using fourier phase analysis**

(57) Provided is a method for analyzing image slices. The method includes transforming a first slice and a second slice to frequency domain and determining shift data between the first slice and the second slice from only the phase component of the transformed first and second slices.

FIG. 5

**Description**

BACKGROUND OF THE INVENTION

Field of the Invention

The present invention relates to image alignment. More particularly, the present invention relates to aligning partial images produced by swipe-style biometric sensing devices.

Related Art

In the field of biometric image analysis, traditional techniques sample an image, such as a fingerprint, as the image is moved or swiped across a sensing mechanism. This sensing mechanism, which could be a fingerprint sensor, captures partial images of the finger during a single swipe. This single swipe produces sets of data at different times and within different coordinate systems. Computer vision technology can then be used to reconstruct an image on the entire fingerprint by sampling these sets of data and combining the partial images to form a complete image of the fingerprint.
The process of transforming these different sets of data into one coordinate system is known to those of skill in the art as image registration. Registration is necessary in order to be able to compare, or integrate, the data obtained from different measurements.
Conventional image registration techniques fall within two realms of classification methods: (i) area-based and (ii) feature-based. The original image is often referred to as the reference image and the image to be mapped onto the reference image is referred to as the target image. For area based image registration methods, the technique looks at the structure of the image via correlation metrics, Fourier properties, and other means of structural analysis.
Most feature based methods, however, fine-tune their mapping to the correlation of image features. These features, for example, include lines, curves, points, line intersections, boundaries, etc. These feature based methods correlate images in lieu of looking at the overall structure of an image.
Both of these conventional image registration techniques, however, suffer shortcomings. For example, conventional techniques are susceptible to background noise, non-uniform illumination, or other imaging artifacts.
What is needed, therefore, is a robust image registration technique that can be used for biometric image analysis that reduces the effects of background noise, non-uniform illumination, and other imaging artifacts noted above in conventional approaches.

SUMMARY OF THE INVENTION

The present invention is directed to a method for analyzing image slices. The method includes transforming a first slice and a second slice to the frequency domain and determining shift data between the first slice and the second slice from only the phase component of the transformed first and second slices.
The present invention provides a unique approach for finding a relative shift in spatial domain in x and y directions between two partial images, particularly biometric images such as fingerprints. More specifically, the present invention provides a means to determine precise x and y coordinates, with a level of noise immunity, without the need to perform correlations. Precisely determining the extent of the x and y shifts between two successive partial images is fundamental to an accurate and seamless construction of an entire fingerprint reconstructed from all of the partial images.
The techniques of present invention virtually ignore background illumination problems. For example, if a background image associated with a fingerprint is gray or dark, this gray or dark background image, which could be mistakenly represented by ridges surrounding the fingerprint, is ignored. This process aids in a more precise determination of the x and y shifts.
Further embodiments, features, and advantages of the present invention, as well as the structure and operation of the various embodiments of the present invention are described in detail below with reference to accompanying drawings.

BRIEF DESCRIPTION OF THE DRAWINGS/FIGURES

The accompanying drawings illustrate the present invention and, together with the description, further serve to explain the principles of the invention and to enable one skilled in the pertinent art to make and use the invention.
FIG. 1 is an illustration of a conventional swipe style biometric sensing device;
FIG. 2 is an illustration of a series of overlapping images of a fingerprint image;
FIG. 3 is a graphical illustration of a Tukey Window applied in accordance with an embodiment of the present invention;

FIG. 4A is an illustration of expanded biometric image slices arranged in accordance with an embodiment of the present invention;

FIG. 4B is an illustration of phase and amplitude components of the image slices of FIG. 4A;

FIG. 5 is a block diagram illustration of a biometric image alignment process in accordance with an embodiment of the present invention; and

FIG. 6 is a block diagram illustration of an exemplary computer system on which the present invention can be implemented.

The present invention will now be described with reference to the accompanying drawings. In the drawings, like reference numbers generally indicate identical, functionally similar, and/or structurally similar elements. The drawing in which an element first appears is indicated by the leftmost digit(s) in the reference number.

DETAILED DESCRIPTION OF THE INVENTION

This specification discloses one or more embodiments that incorporate the features of this invention. The embodiment(s) described, and references in the specification to "one embodiment", "an embodiment", "an example embodiment", etc., indicate that the embodiment(s) described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the art to effect such feature, structure, or characteristic in connection with other embodiments whether or not explicitly described.

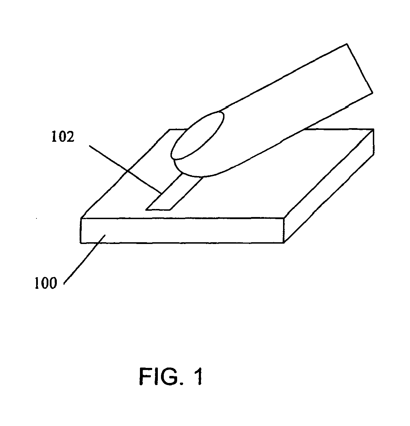

FIG. 1 is an illustration of a conventional swipe-style biometric sensing device 100 according to embodiments of the present invention. In FIG. 1, the device 100 includes a sensor 102 for obtaining biometric data (e.g. fingerprint data). In some embodiments, the sensor 102 can be an acoustic impediography or a piezoelectric device. The sensor 102 is used to capture the partial images of a biometric device, such as a finger, discussed above.

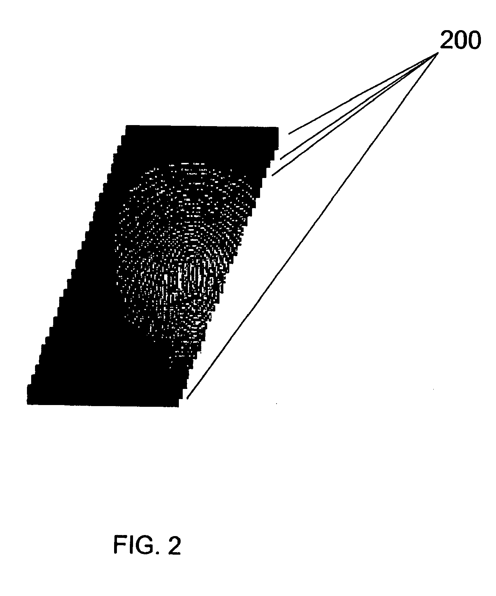

FIG. 2 is an illustration of a series of overlapping partial images 200 of a fingerprint that could be generated from the swipe-style sensor 102 of FIG. 1. The objection of image registration, noted supra, is to be able to estimate a spatial shift between each successive pair of images from within the partial images 200, in both x and y directions.

By way of background, the estimation of spatial shift between two image slices is mathematically equivalent to estimating a time delay between acoustic or radar signals received at two or more transducer locations. The accurate estimation of time delay of arrival (TDOA) between received signals plays a dominant role in numerous engineering applications of signal processing. Various TDOA estimation procedures have been proposed and implemented over the years, including cross-correlation functions, unit impulse response calculations, smoothed coherence transforms, maximum likelihood estimates, as well as many others.

A general discrete-time model used for TDOA estimation can be stated as follows:

$$u_0(n) = x(n) + s_0(n) \tag{1}$$

$$u_1(n) = x(n - D) + s_1(n) \tag{2}$$

where $u_0(n)$ and $u_1(n)$ are the two signals at the observation points (i.e. sensors), $x(n)$ is the signal of interest that is referenced (zero time-delay) according to the first sensor and will have a delay of $D$ by the time it arrives at the second sensor, and $s_0(n)$ and $s_1(n)$ are noise components of the first and second sensors, respectively.

The goal of TDOA estimation is to estimate $D$ given a segment of data obtained from each sensor, without any prior knowledge regarding the source signal $x(n)$ or the noises. This problem has been extensively explored in the past, and depending on the application at hand, different approaches have been proposed.

The most commonly used TDOA estimation technique is cross correlation. In cross correlation, an estimate $\check{D}$ to the actual TDOA $D$ is obtained by

$$\hat{D} = \arg\max_{D} \sum_{n} u_0(n)u_1(n+D)$$

(3)

Cross-correlation can be performed in the frequency domain leading to the formula

$$\hat{D} = \arg\max_{D} \int_{\omega} U_0(e^{j\omega})U_1^*(e^{j\omega})e^{-j\omega D}d\omega$$

(4)

where $U_0(e^{j\omega})$ and $U_1(e^{j\omega})$ are the discrete-time Fourier transforms of the signals $u_0(n)$ and $u_1(n)$ respectively.

In 1972, for example, an ad hoc technique called the PHAse Transform for TDOA estimation in sonar systems was developed at the Naval Underwater Systems Center in New London, Connecticut. For more information on the PHAse Transform please see, "The Generalized Correlation Method for Estimation of Time Delay," by Charles H. Knapp and G. Clifford Carter, IEEE transactions on Acoustics, Speech, and Signal Processing, Vol. ASSP-24, No. 4, August 1976 and "Theory and Design of Multirate Sensor Arrays," by Omid S. Jahromi and Parham Aarabi, IEEE Transactions On Signal Processing, Vol. 53, No. 5, May 2005, which are both incorporated herein in their entireties. The PHAse Transform approach completely ignores the amplitude of the Fourier transforms and uses the following integral to estimate the time delay

$$\hat{D} = \arg\max_{D} \int_{\omega} \cos\left(\omega D - (\angle U_0(e^{j\omega}) - \angle U_1(e^{j\omega}))\right)d\omega$$

(5)

The PHAse Transform can be interpreted as a form of "line fitting" in the frequency domain. Assume, for example, that noise is negligible and that the time delay D is much less than the length of observed signals $u_0(n)$ and $u_1(n)$. In this case, it could be safely assumed that $u_1(n)$ is very close to a circularly shifted version of $u_0(n)$. This means $U_0(e^{j\omega}) \simeq U_0(e^{j\omega})e^{-j\omega D}$ or, equivalently, $\angle U_0(e^{j\omega}) - \angle U_1(e^{j\omega}) \simeq \omega D$.

The PHAse Transform integral (5) essentially tries to find a D for which the discrepancy between the line $\omega D$ and the phase error $\angle U_0(e^{j\omega}) - \angle U_1(e^{j\omega})$ is minimum. There is, however, an important difference between the PHAse Transform approach and traditional methods (e.g., line fitting methods that use least-mean-square error to calculate the best fit). The PHAse Transform uses a cosine function to calculate the error between the measured Fourier phase difference $\angle U_0(e^{j\omega}) - \angle U_1(e^{j\omega})$ and the perfect line $\omega D$. This approach has the advantage that $\pm 2\pi$ phase ambiguities, that occur while calculating the angle of complex Fourier transform coefficients, are automatically eliminated.

The use of Fourier transform phase for determining the time delay of arrival, for example, is well known to those of skill in the art. Recently, the PHAse Transform has been generalized to multi-rate signals by the inventor of the present application. For more information, please see "Theory and Design of Multirate Sensor Arrays," by Omid S. Jahromi and Parham Aarabi, IEEE Transactions On Signal Processing, Vol. 53, No. 5, May 2005.

From a theoretical point of view, it is straightforward to generalize the one-dimensional PHAse Transform described above to estimate the spatial shift between two overlapping images. However, there are practical issues with this approach that must be addressed. These issues are addressed in the present invention, which applies the PHAse Transform technique to biometric image analysis. More specifically, the present invention uses the PHAse Transform technique to align overlapping fingerprint image slices and combine those overlapping image slices to form a complete seamless fingerprint image.

To apply the PHAse Transform technique to biometric image analysis, one can first multiply each of the partial images 200 with a carefully designed windowing function to smooth out the edges of the partial images.

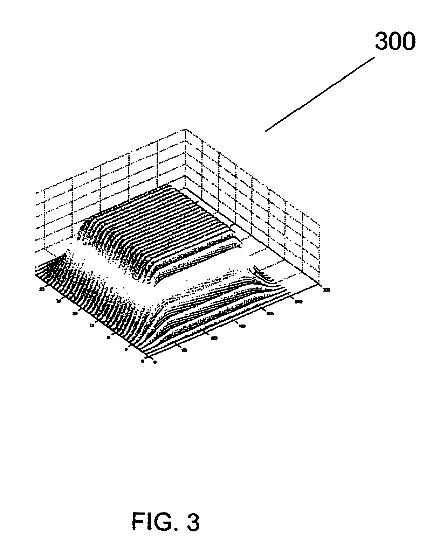

FIG. 3 is a graphical illustration of an exemplary Tukey windowing function 300 applied in accordance with an embodiment of the present invention. A Tukey window is used in FIG. 3 as merely an example approach. The present invention, however, is not limited to a Tukey window. For example, a Hamming window or a Kaiser window, to name a few, could also be used. The windowing function is used to smooth or reduce the sharpness of pixels near the edge of images, such as the partial images 200.

After being smoothed, the partial images are then embedded within a larger image for expansion. That is, each of the partial images is zero-padded so that its area is extended to almost twice its original size.

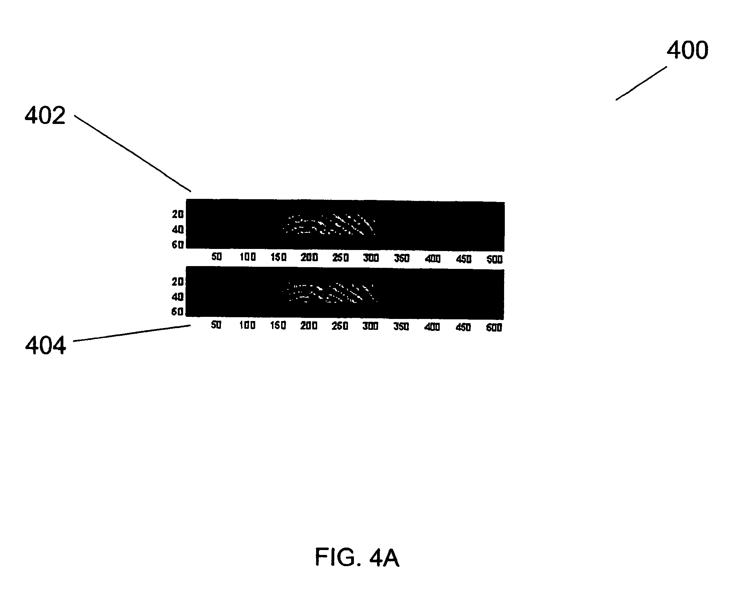

FIG. 4A is plot 400 of expanded (zero-padded) biometric image slices 402 and 404 in accordance with the present invention. In FIG. 4A, for example, two of the images 200 (e.g., images 402 and 404) are extended in size. Although other extension sizes can be selected, for purposes of illustration the images 402 and 404 were chosen to be 64 × 512. This choice provides enough spatial-frequency resolution in the image slices, after each image slice is Fourier transformed, as illustrated below.

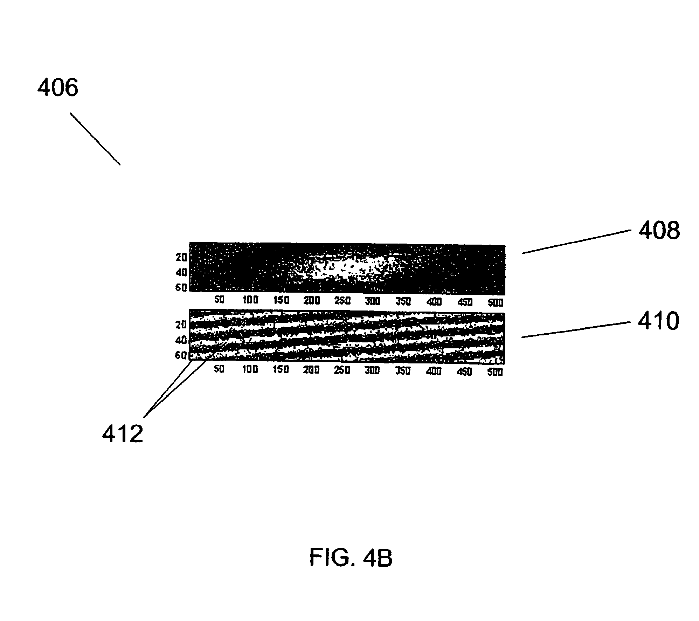

FIG. 4B is a plot 406 of phase and amplitude components of the extended image slices 402 and 404, after transformation to frequency domain. For purposes of illustration, FIG. 4B represents application of a two dimensional fast Fourier transform (FFT) to the extended image slice 402 only. Correspondingly, the product $U_0(e^{j\omega 1}, e^{j\omega 2})U_1^*(e^{j\omega 1}, e^{j\omega 2})$ is derived from application of the FFT to the extended image slice 402. In the plot 406, this product is represented by an amplitude image 408 and a phase image 410. The $U_0(e^{j\omega 1}, e^{j\omega 2})$ portion of the product represents the amplitude image 408. The $U_1^*(e^{j\omega 1}, e^{j\omega 2})$ portion of the product represents the phase image 410.

In the present invention, while the phase image 410, associated with the slice 402, is important, the amplitude image 408 is not used and is therefore discarded. As can be observed in FIG. 4B, the phase image 410 includes wave-like patterns 412 from which shift data can be extracted. This shift data is especially relevant in the context of aligning the extended image slice 402 with the extended image slice 404. This shift data is extracted by application of a PHAse Transform, as discussed above.

It is important to note that the process discussed above with reference to the extended image slice 402, is repeated for the extended image slice 404. That is, phase and amplitude components associated with the extended image slice 404 are derived via application of an FFT, with the resulting amplitude component being discarded. The phase component of the extended image slice 404 (not shown) will also include wave-like patterns.

More specifically, a frequency of the wave-like patterns 412 from the phase image 410 and a corresponding phase image associated with the extended slice 404, represents a shift in the y (vertical) direction between these two successive images (i.e., the extended image slices 402 and 404). A tilt in the waves (with respect to a perfectly horizontal wavefront) represents a shift in the x (horizontal) direction between the image slices 402 and 404.

The exact values of the shifts in x and y directions between the extended image slices 402 and 404 can be determined by applying the PHAse Transform to their respective phase components. For purposes of illustration, the PHAse Transform can be expressed in the following exemplary manner:

$$(\check{D}_1, \check{D}_2) = \arg \max_{(\check{D}_1, \check{D}_2)} \int\limits_{\omega_1} \int\limits_{\omega_2} \cos \left( \omega_1 D_1 + \omega_2 D_2 - (\angle U_0(e^{j\omega_1}, e^{j\omega_2}) - \angle U_1(e^{j\omega_1}, e^{j\omega_2})) \right) d\omega_1 d\omega_2 \qquad (6)$$

In the expression (6) above, $\check{D}_1$ precisely represents the shift in the x direction between the successive extended image slices 402 and 404. $\check{D}_2$ precisely represents a shift in the y direction between these successive image slices. The present invention is not limited, however, to the particular expression (6) in that the PHAse Transform can be determined through numerous other methods. This process is then repeated, as described below, for all of the successive image slice pairs within the overlapping partial images 200. Precisely determining the shifts in the x and y directions is fundamental to an accurate and seamless construction of a complete fingerprint from partial images.

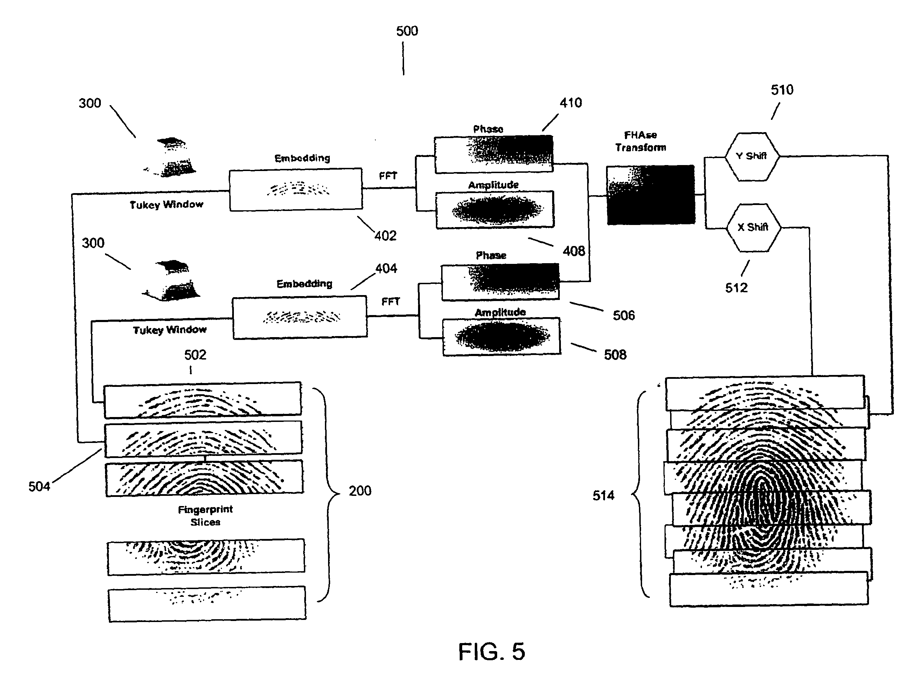

FIG. 5 is a block diagram illustration of an exemplary biometric image alignment process 500 in accordance with the present invention. In FIG. 5, the partial images 200 are shown. These images are produced through capture using a swipe-style biometric sensor, such as the sensor 102 of the device 100 of FIG. 1. Some other similar device could also be used. Specific successive image slices 502 and 504 are then selected for processing from the partial images 200.

A windowing function, such as the Tukey window 300, is applied to each of the images 502 and 504 to provide the smoothing aspect noted above. After application of an appropriate windowing function, the resulting smoothed slices are embedded into a larger blank image for expansion. This expanding process produces the extended image slices 402 and 404. The extended image slices 402 and 404 are then transformed to image domain by applying an FFT, inherently producing complex products.

That is, in frequency domain, each of the extended image slices 402 and 404 has a corresponding amplitude and phase component. For example, the extended image slice 402 produces phase and amplitude components 410 and 408, respectively. Similarly, the extended image slice 404 produces phase and amplitude components 506 and 508, respectively. In accordance with the present invention, the amplitude components 408 and 508 are discarded.

Next, a PHAse Transform is applied to the phase components 410 and 506 to determine a shift in the horizontal and vertical directions between the successive extended image slices 402 and 404. In the example of FIG. 5, a y shift 510 represents a shift between the images 402 and 404 in the vertical direction. An x shift 512 represents a shift between the images 402 and 404 in the horizontal direction. This process is then repeated for all of the remaining successive images from the partial images 200. By precisely determining the relative positions of all of the successive slices within the partial images 200, all of these images can be assembled to form a complete fingerprint 514, as shown

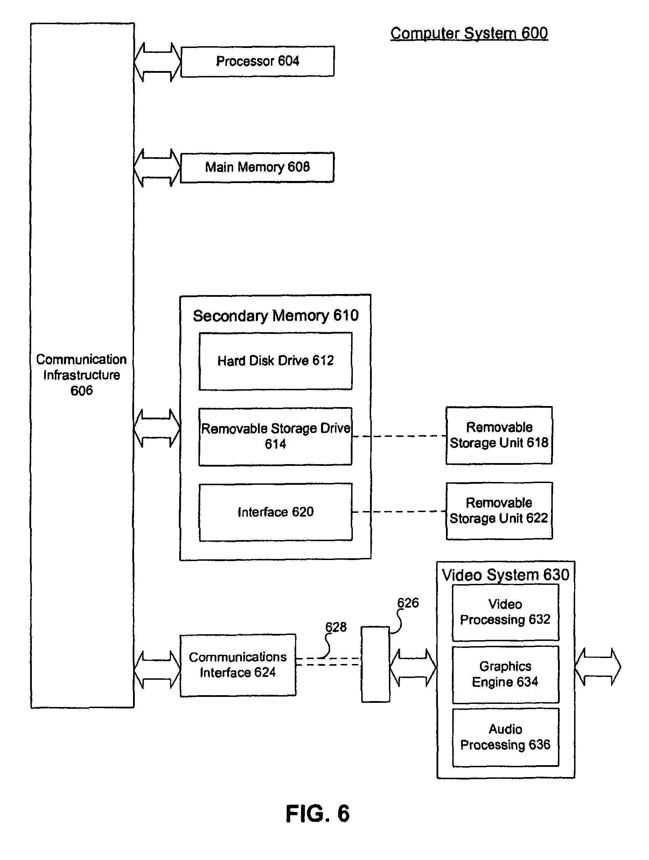

Aspects of the present invention can be implemented in software, hardware, or as a combination thereof These aspects of the present invention may be implemented in the environment of a computer system or other processing system. An example of such a computer system 600 is shown in FIG. 6.

In FIG. 6, a computer system 600 includes one or more processors, such as a processor 604. The processor 604 can be a special purpose or a general purpose digital signal processor. The processor 604 is connected to a communication infrastructure 606 (for example, a bus or network). Various software implementations are described in terms of this exemplary computer system. After reading this description, it will become apparent to a person skilled in the relevant art how to implement the invention using other computer systems and/or computer architectures.

The computer system 600 also includes a main memory 608, preferably random access memory (RAM), and may also include a secondary memory 610. The secondary memory 610 may include, for example, a hard disk drive 612 and/or a removable storage drive 614, representing a floppy disk drive, a magnetic tape drive, an optical disk drive, etc. The removable storage drive 614 reads from and/or writes to a removable storage unit 618 in a well known manner. The removable storage unit 618, represents a floppy disk, magnetic tape, optical disk, etc. which is read by and written to by removable storage drive 614. As will be appreciated, the removable storage unit 618 includes a computer usable storage medium having stored therein computer software and/or data.

In alternative implementations, the secondary memory 610 may include other similar means for allowing computer programs or other instructions to be loaded into the computer system 600. Such means may include, for example, a removable storage unit 622 and an interface 620. Examples of such means may include a program cartridge and cartridge interface (such as that found in video game devices), a removable memory chip (such as an EPROM, or PROM) and associated socket, and the other removable storage units 622 and the interfaces 620 which allow software and data to be transferred from the removable storage unit 622 to the computer system 600.

The computer system 600 may also include a communications interface 624. The communications interface 624 allows software and data to be transferred between the computer system 600 and external devices. Examples of the communications interface 624 may include a modem, a network interface (such as an Ethernet card), a communications port, a PCMCIA slot and card, etc. Software and data transferred via the communications interface 624 are in the form of signals 628 which may be electronic, electromagnetic, optical or other signals capable of being received by the communications interface 624. These signals 628 are provided to the communications interface 624 via a communications path 626. The communications path 626 carries the signals 628 and may be implemented using wire or cable, fiber optics, a phone line, a cellular phone link, an RF link and other communications channels.

In the present application, the terms "computer readable medium" and "computer usable medium" are used to generally refer to media such as the removable storage drive 614, a hard disk installed in the hard disk drive 612, and the signals 628. These computer program products are means for providing software to the computer system 600.

Computer programs (also called computer control logic) are stored in the main memory 608 and/or the secondary memory 610. Computer programs may also be received via the communications interface 624. Such computer programs, when executed, enable the computer system 600 to implement the present invention as discussed herein.

In particular, the computer programs, when executed, enable the processor 604 to implement the processes of the present invention. Accordingly, such computer programs represent controllers of the computer system 600. By way of example, in the embodiments of the invention, the processes/methods performed by signal processing blocks of encoders and/or decoders can be performed by computer control logic. Where the invention is implemented using software, the software may be stored in a computer program product and loaded into the computer system 600 using the removable storage drive 614, the hard drive 612 or the communications interface 624.

CONCLUSION

Example embodiments of the methods, systems, and components of the present invention have been described herein. As noted elsewhere, these example embodiments have been described for illustrative purposes only, and are not limiting. Other embodiments are possible and are covered by the invention. Such other embodiments will be apparent to persons skilled in the relevant art(s) based on the teachings contained herein. Thus, the breadth and scope of the present invention should not be limited by any of the above described exemplary embodiments, but should be defined only in accordance with the following claims and their equivalents.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

The present application discloses an apparatus according to the following numbered clauses:

1. An apparatus for analyzing image slices, comprising:

means for transforming a first slice and a second slice to frequency domain; and

means for determining shift data between the first slice and the second slice from only a phase component of the transformed first and second slices.

2. The apparatus of clause 1, further comprising:

means for windowing a third slice and a fourth slice for smoothing of edges associated therewith; and
means for extending an area of the windowed third and fourth slices to obtain the first and second slices.

3. The apparatus of clause 2, wherein the windowing is performed using at least one of a Tukey Window or a Hamming window.

4. The apparatus of clause 2, wherein the extending includes embedding the smoothed slices into a larger image.

5. The apparatus of clause 4, wherein the larger image is a blank image.

6. The apparatus of clause 1, wherein the transforming include applying a Fast Fourier Transform (FFT).

7. The apparatus of clause 6, wherein the FFT is two dimensional.

8. The apparatus of clause 1, wherein the shift data includes shift information in vertical and horizontal directions.

9. The apparatus of clause 8, further comprising aligning first slice and the second slice based upon the vertical and horizontal shift information.

10. The apparatus of clause 1, wherein the determining includes applying a PHAse Transform.

**Claims**

1.  A method for analyzing image slices, comprising:

transforming a first slice and a second slice to frequency domain; and
determining shift data between the first slice and the second slice from only a phase component of the transformed first and second slices.

2.  The method of claim 1, further comprising:

windowing a third slice and a fourth slice for smoothing of edges associated therewith; and
extending an area of the windowed third and fourth slices to obtain the first and second slices.

3.  The method of claim 2, wherein the windowing is performed using at least one of a Tukey Window and a Hamming window.

4.  The method of claim 2, wherein the extending includes embedding the smoothed slices into a larger image.

5.  The method of claim 4, wherein the larger image is a blank image.

**6.** The method of claim 1, wherein the transforming include applying a Fast Fourier Transform (FFT).

**7.** The method of claim 6, wherein the FFT is two dimensional.

**8.** The method of claim 1, wherein the shift data includes shift information in vertical and horizontal directions.

**9.** The method of claim 8, further comprising aligning the first slice and the second slice based upon the vertical and horizontal shift information.

**10.** The method of claim 1, wherein the determining includes applying a PHAse Transform.

**11.** An apparatus arranged to perform the method of any one of the preceding claims.

**12.** A computer comprising the apparatus of claim 11.

**13.** A computer program arranged to perform the method of any one of claims 1 to 10 when executed by a suitably arranged computer.

**14.** A method for analyzing image slices, comprising:

transforming a first slice and a second slice to frequency domain; and
determining shift data between the first slice and the second slice based upon a phase component of the transformed first and second slices, said determining not being based upon an amplitude component of the transformed first and second slices.

**15.** An apparatus for analyzing image slices, comprising:

means for transforming a first slice and a second slice to frequency domain; and
means for determining shift data between the first slice and the second slice based upon a phase component of the transformed first and second slices and not based upon an amplitude component of the transformed first and second slices.

102

100

FIG. 1

200

FIG. 2

300

FIG. 3

400

402

404

FIG. 4A

FIG. 4B

FIG. 5

Computer System 600

Processor 604

Main Memory 608

Secondary Memory 610

Hard Disk Drive 612

Removable Storage Drive 614 — — — Removable Storage Unit 618

Interface 620 — — — Removable Storage Unit 622

Communication Infrastructure 606

Communications Interface 624

628

626

Video System 630

Video Processing 632

Graphics Engine 634

Audio Processing 636

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Charles H. Knapp ; G. Clifford Carter.** The Generalized Correlation Method for Estimation of Time Delay. *IEEE transactions on Acoustics, Speech, and Signal Processing,* August 1976, vol. ASSP-24 (4

- **Omid S. Jahromi ; Parham Aarabi.** Theory and Design of Multirate Sensor Arrays. *IEEE Transactions On Signal Processing,* May 2005, vol. 53 (5